# EUROPÄISCHE PATENTSCHRIFT

(11) **EP 2 992 588 B1**
(45) Veröffentlichungstag und Bekanntmachung des Hinweises auf die Patenterteilung: **14.06.2017**
(21) Anmeldenummer: 14717735.6
(22) Anmeldetag: 11.04.2014
(51) Int. Cl.: H02K 1/18, H02K 5/24

(54) **SYNCHRONGENERATOR-STATOR UND SYNCHRONGENERATOR**
SYNCHRONOUS GENERATOR STATOR AND SYNCHRONOUS GENERATOR
STATOR DE GÉNÉRATEUR SYNCHRONE ET GÉNÉRATEUR SYNCHRONE

(30) Priorität: 30.04.2013 DE 102013207931
(43) Veröffentlichungstag der Anmeldung: 09.03.2016
(73) Patentinhaber: Wobben Properties GmbH, 26607 Aurich (DE)
(72) Erfinder: RÖER, Jochen, 27777 Ganderkesee (DE); FEITH, Manuel, 26427 Esens (DE); JEPSEN, Torsten, 26603 Aurich (DE)
(74) Vertreter: Eisenführ Speiser
(86) Internationale Anmeldenummer: PCT/EP2014/057377
(87) Internationale Veröffentlichungsnummer: WO 2014/177363

(56) Entgegenhaltungen:
- DE-A1-102007 040 339
- FR-A1- 2 979 768
- JP-A- 2011 015 536
- US-A- 2 632 861
- US-B2- 6 770 996

## Beschreibung

Die vorliegende Erfindung betrifft einen Synchrongenerator-Stator und Synchrongenerator.

Synchrongeneratoren werden z. B. in Windenergieanlagen verwendet und weisen einen Generator-Stator und einen Generator-Läufer oder Generator-Rotor auf. Der Generator-Stator ist typischerweise fest mit einer Gondel einer Windenergieanlage verbunden und der Generator-Rotor ist mit einem Rotor der Windenergieanlage direkt oder indirekt (über ein Getriebe) gekoppelt. Bei der Drehung des Rotors einer Windenergieanlage dreht sich somit der Generator-Rotor des Synchrongenerators mit, so dass der Synchrongenerator elektrische Energie erzeugt.

US 6,770,996 B2 zeigt einen Synchrongenerator-Stator mit einem Statorring, einem Statorblechpaket, einen umlaufenden Spalt zwischen dem Statorring und dem Statorblechpaket und eine Entkoppelungseinheit in dem Spalt. Die Entkoppelungseinheit weist ein erstes Blech, das an eine Kontur des Statorblechpaketes angepasst ist und ein zweites Blech auf, das an die Kontur des Statorringes angepasst ist.

FR 2 979 768 A1 zeigt eine Anordnung zur Verminderung von Lärm in Lufttaschen zwischen dem Statorblechpaket und dem Gehäusering.

DE 10 2007 040 339 A1 und US 2,632,861 A zeigen jeweils eine Mehrzahl von Federstege und Abschnitte eines elastischen Dichtungselementes, welches zwischen einem Gehäuse und dem Statorblechpaket verwendet wird.

JP 2011 015 536 A1 zeigt wie Wasser und Silikonkautschuk als Entkoppelungsmittel verwendet werden.

Es ist eine Aufgabe der Erfindung, einen Synchrongenerator für eine Windenergieanlage vorzusehen, welcher eine reduzierte Schallemission ermöglicht.

Diese Aufgabe wird durch einen Synchrongenerator-Stator nach Anspruch 1 durch einen Synchrongenerator nach Anspruch 3 und ein Verfahren nach Anspruch 5 gelöst.

Es wird ein Synchrongenerator-Stator mit einem Statorring, einem Statorblechpaket, einem umlaufenden Spalt zwischen dem Statorring (bzw. seiner Innen- oder Außenkontur) und dem Statorblechpaket (bzw. seiner Außen- oder Innenkontur) sowie einer Mehrzahl von Entkopplungseinheiten in dem Spalt vorgesehen.

Die Entkopplungseinheit weist ein erstes Blech, das an die (Außen-)Kontur des Statorblechpaketes angepasst ist, und ein zweites Blech auf, das an die (Innen-)Kontur des Statorringes angepasst ist. Zwischen dem ersten und zweiten Blech ist eine Matte mit einem Hohlraum und einem Einlassventil vorgesehen.

Der Spalt kann als ein ringförmiger Spalt ausgestaltet sein.

Der Hohlraum ist durch das Einlassventil mit einem Druckmedium befüllbar.

Gemäß einem Aspekt der vorliegenden Erfindung ist die Matte als eine einvulkanisierte Gummidruckmatte ausgestaltet.

Die Erfindung betrifft ebenfalls einen Synchrongenerator mit einem erfindungsgemäßen Synchrongenerator-Stator.

Die Erfindung betrifft ebenfalls ein Verfahren zum Montieren eines Synchrongenerator-Stators, der einen Statorring und ein Statorblechpaket aufweist. Das Statorblechpaket wird in einen Statorring eingeführt, so dass ein umlaufender Spalt zwischen einer Kontur des Statorringes und einer Kontur des Statorblechpaketes vorhanden ist. Eine Mehrzahl von Entkopplungseinheiten wird in den Spalt eingeführt.

Gemäß einem weiteren Aspekt der vorliegenden Erfindung wird ein Druckmedium über ein Einlassventil in die Entkopplungseinheit eingeführt, um einen Hohlraum der Matte zwischen dem ersten und zweiten Blech zu füllen, nachdem die Mehrzahl der Entkopplungseinheiten in den Spalt eingeführt worden ist.

Die Erfindung betrifft ebenfalls eine Windenergieanlage mit einem Synchrongenerator mit einem erfindungsgemäßen Synchrongenerator-Stator.

Die Erfindung betrifft einen Gedanken, einen Synchrongenerator-Stator vorzusehen, der in einem Spalt zwischen einem Statorring und einem Statorblechpaket eine Mehrzahl von Entkopplungseinheiten aufweist. Diese Entkopplungseinheiten können zur Vermeidung einer Übertragung von Vibrationen oder Körperschall von dem Statorblechpaket auf den Statorring vorgesehen werden.

Gemäß einem Aspekt der Erfindung weist ein Entkopplungselement ein äußeres und ein inneres Blechteil sowie eine flexible Matte wie beispielsweise eine Gummidruckmatte dazwischen auf.

Der Synchrongenerator kann als ein Innenläufer ausgestaltet sein, d. h. der Läufer oder Rotor des Generators ist innerhalb des Stators vorgesehen.

Die Matte zwischen den beiden Blechen der Entkopplungseinheit kann einen Hohlraum aufweisen, so dass ein Druckmedium in diesen Hohlraum eingeführt werden kann. Somit können die Entkopplungselemente zunächst ohne Druckmedium in den Spalt zwischen Statorring und Statorblechpaket eingeführt werden, um dann anschließend ein Druckmedium einzubringen, so dass die Entkopplungselemente den Spalt zwischen dem Statorring und dem Statorblechpaket (unter Dickenzunahme) ausfüllen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine perspektivische Darstellung eines Synchrongenerator-Stators gemäß einem ersten Ausführungsbeispiel,
- Fig. 3A und 3B: zeigen jeweils eine perspektivische Ansicht einer Entkopplungseinheit für einen Synchrongenerator-Stator gemäß dem ersten Ausführungsbeispiel,
- Fig. 4: zeigt eine schematische perspektivische Ansicht eines Ausschnitts des Synchrongenerators gemäß dem ersten Ausführungsbeispiel,
- Fig. 5: zeigt eine weitere schematische perspektivische Ansicht eines Ausschnitts des Synchrongenerator-Stators gemäß dem ersten Ausführungsbeispiel, und
- Fig. 6: zeigt eine perspektivische Schnittansicht eines Synchrongenerator-Stators gemäß dem ersten Ausführungsbeispiel.

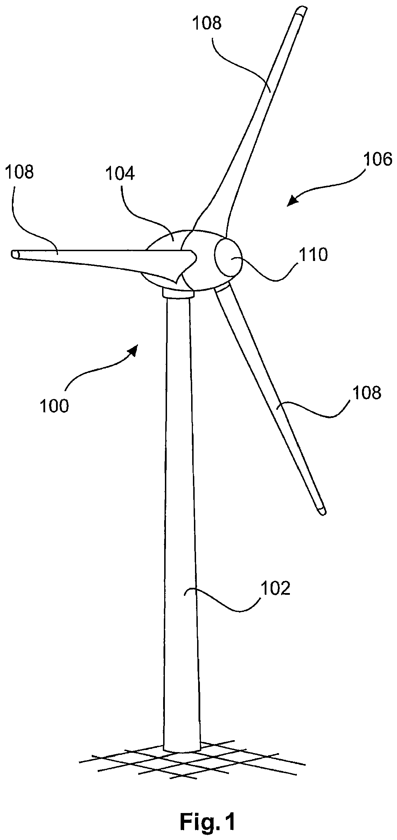

Fig. 1 zeigt eine schematische Darstellung einer Windenergieanlage gemäß der Erfindung. Die Windenergieanlage 100 weist einen Turm 102 und eine Gondel 104 auf. An der Gondel 104 ist ein Rotor 106 mit drei Rotorblättern 108 und einem Spinner 110 vorgesehen. Der Rotor 106 wird im Betrieb durch den Wind in eine Drehbewegung versetzt und dreht somit auch den Rotor oder Läufer eines Synchrongenerators in der Gondel 104. Der Pitchwinkel der Rotorblätter 108 kann durch Pitchmotoren an den Rotorblattwurzeln der jeweiligen Rotorblätter 108 verändert werden.

Der Synchrongenerator-Stator des Synchrongenerators ist typischerweise mit der Gondel der Windenergieanlage fest verbunden, während der Rotor des Synchrongenerators mit dem aerodynamischen Rotor der Windenergieanlage direkt (oder über ein Getriebe) gekoppelt ist, so dass sich der Generator-Rotor dreht, wenn sich der aerodynamische Rotor der Windenergieanlage dreht.

Im Folgenden wird die Ausführung für einen Innenläufer beschrieben. Bei einem Außenläufer ist "innen" und "außen" zu vertauschen.

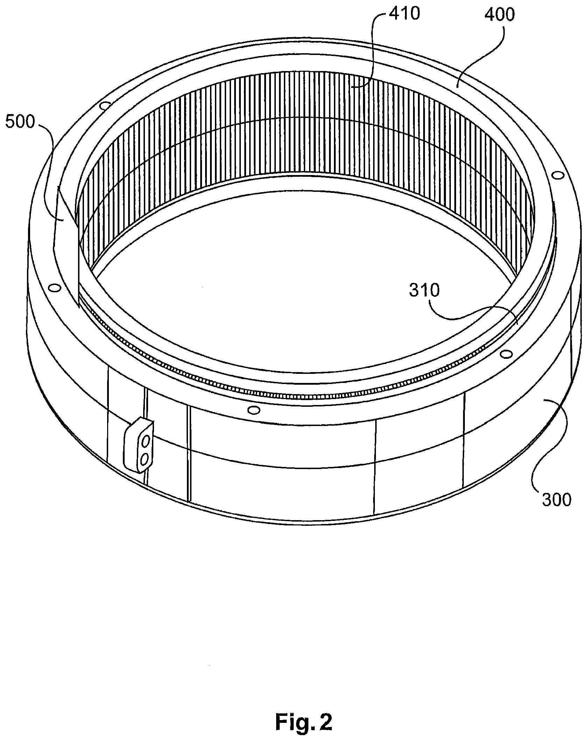

Fig. 2 zeigt eine perspektivische Darstellung eines Synchrongenerator-Stators gemäß einem ersten Ausführungsbeispiel. Der Stator weist einen äußeren Statorring 300, ein innenliegendes Statorblechpaket 400 sowie einen umlaufenden Spalt 310 zwischen der Außenseite des Statorblechpaketes 400 und der Innenseite des Statorringes 300 auf. In diesem umlaufenden Spalt 310 wird eine Mehrzahl von Entkopplungseinheiten 500 vorgesehen. Die Entkopplungseinheiten 500 dienen der Vibrations- und/oder Körperschallentkopplung zwischen dem Statorblechpaket 400 und dem Statorring 300.

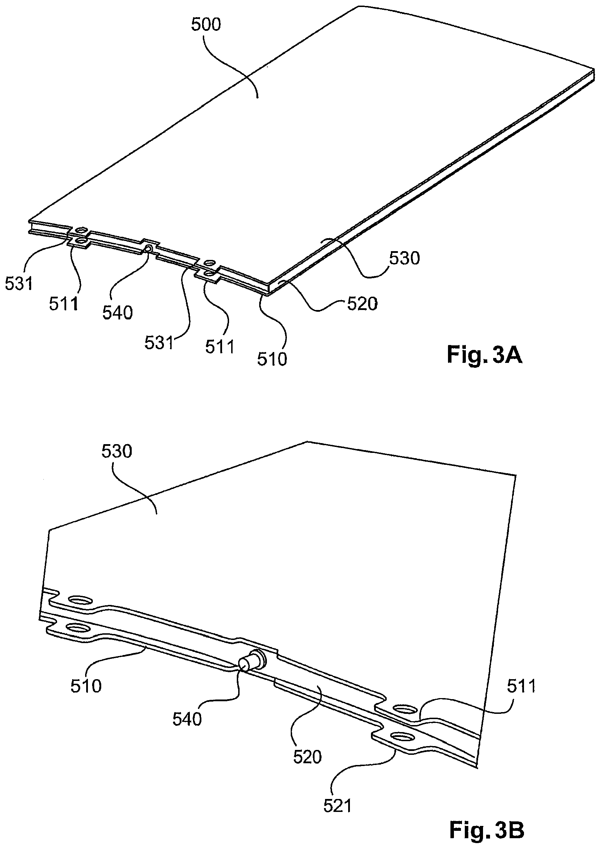

Fig. 3A und 3B zeigen jeweils eine perspektivische Ansicht einer Entkopplungseinheit für einen Synchrongenerator-Stator gemäß dem ersten Ausführungsbeispiel. Die Entkopplungseinheit 500 weist ein erstes und zweites Blech 510, 530 sowie eine Matte 520 zwischen dem ersten und zweiten Blech 510, 530 auf. Das erste Blech 510 ist an die Außenkontur des Statorblechpaketes 400 angepasst. Das zweite Blech 530 ist an die Innenkontur des Statorringes 300 angepasst. Die Entkopplungseinheiten 500 werden kreissegmentartig in dem umlaufenden Spalt 310 angeordnet. An dem ersten Blech 510 können z. B. zwei Befestigungslaschen 511 und an dem zweiten Blech 530 können zwei Befestigungslaschen 531 vorgesehen sein. Diese Laschen 511, 531 sind an einer Stirnseite der Entkopplungseinheit 500 vorgesehen. Die Matte 520 zwischen dem ersten und zweiten Blech 510, 530 kann einen Hohlraum aufweisen, welcher über ein Einlassventil 540 an der Stirnseite der Entkopplungseinheit 500 mit einem Druckmedium befüllbar ist.

Gemäß einem Aspekt der vorliegenden Erfindung ist das erste und zweite Entkopplungsblech ca. 2 mm dick und die Matte 520 stellt eine einvulkanisierte Gummidruckmatte dar.

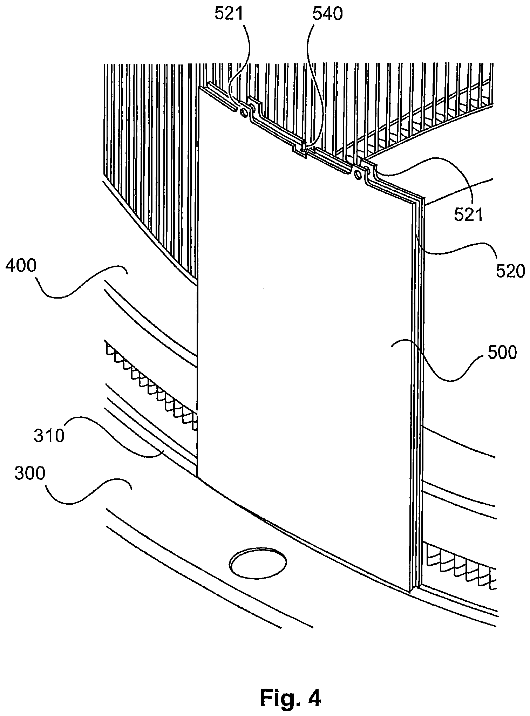

Fig. 4 zeigt eine schematische perspektivische Ansicht eines Ausschnitts des Synchrongenerators gemäß dem ersten Ausführungsbeispiel. Insbesondere ist in Fig. 4 der Einbau eines Entkopplungselementes 500 in einem umlaufenden Spalt 310 zwischen dem Statorring 300 und dem Statorblechpaket 400 gezeigt. Hierbei wird das Entkopplungselement 500 in den Spalt 310 eingeführt. Optional kann hierbei z. B. die Matte 520 zwischen dem ersten und zweiten Blech 510, 530 ohne ein Druckmedium vorgesehen sein, so dass der Einbau einfacher möglich ist.

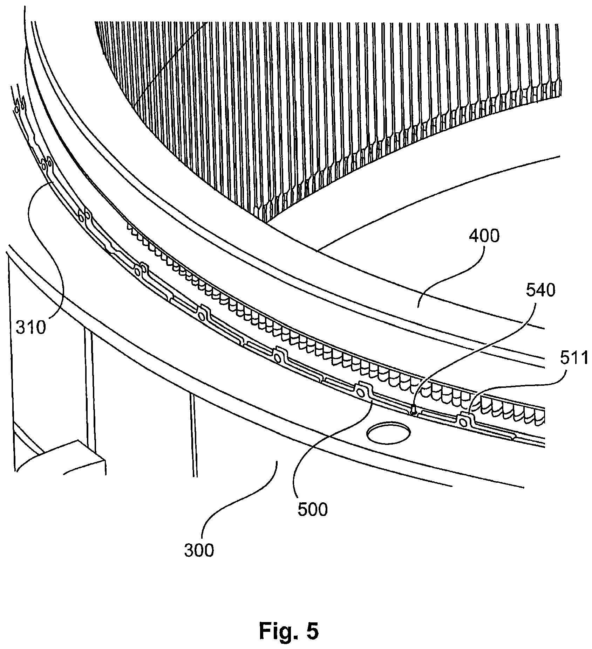

Fig. 5 zeigt eine weitere schematische perspektivische Ansicht eines Ausschnitts des Synchrongenerator-Stators gemäß dem ersten Ausführungsbeispiel. Der Synchrongenerator-Stator weist einen Statorring 300, ein Statorblechpaket 400 sowie einen umlaufenden Spalt 310 zwischen dem Statorring 300 und dem Statorblechpaket 400 auf. In diesen Spalt wird eine Mehrzahl von Entkopplungseinheiten 500 platziert bzw. eingeführt. Nachdem die Entkopplungseinheiten 500 in den umlaufenden Spalt 310 eingeführt worden sind, kann mittels des Einlassventils 540 ein Druckmedium in den Hohlraum der Matte 520 eingeführt werden. Dies hat zur Folge, dass sich der Abstand zwischen dem ersten und zweiten Blech 510, 530 vergrößert, bis das erste Blech an der Außenkontur des Statorblechpaketes 400 und das zweite Blech 530 an der Innenkontur des Statorringes 300 anliegt.

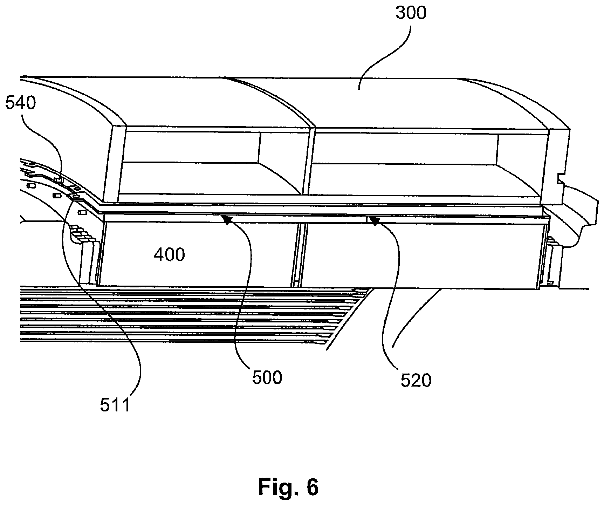

Fig. 6 zeigt eine perspektivische Schnittansicht eines Synchrongenerator-Stators gemäß dem ersten Ausführungsbeispiel. Der Synchrongenerator-Stator weist einen Statorring 300, ein Statorblechpaket 400 sowie einen Spalt 310 zwischen dem Statorring 300 und dem Statorblechpaket 400 auf. In diesem Spalt 310 ist eine Mehrzahl von Entkopplungseinheiten 500 vorgesehen. Die Entkopplungseinheit 500 weist ein erstes und zweites Blech 510, 530 sowie eine Matte 520 dazwischen auf. Die Ausgestaltung der Entkopplungseinheiten gemäß Fig. 6 kann auf einer Entkopplungseinheit gemäß Fig. 3A und 3B beruhen bzw. basieren.

Damit sind die Entkopplungseinheiten zwischen dem Statorblechpaket 400 und dem Statorring 300 vorgesehen.

Mittels des Einlassventiles 540 kann ein Druckmedium in den Hohlraum der Matte eingeführt werden, so dass der Spalt zwischen Statorring 300 und Blechpaket 400 ausgefüllt und zur Drehmomentübertragung verpresst werden kann. Auch kann über die Entkopplungselemente der Generatorluftspalt eingestellt werden.

Gemäß der Erfindung kann durch die Verwendung der Entkopplungseinheiten in dem Spalt zwischen dem Statorring 300 und dem Statorblechpaket eine Körperschallentkopplung und/oder Vibrationsentkopplung vorgesehen werden, so dass sich die Schallemission des Synchrongenerators erheblich reduzieren kann.

Der Synchrongenerator gemäß der Erfindung stellt einen langsam drehenden Synchrongenerator und insbesondere einen Ringgenerator für eine Windenergieanlage oder eine Wasserkraftanlage dar. Der Synchrongenerator weist eine Nennleistung von > 1 MW auf. Der Synchrongenerator hat eine Drehzahl von unter 40 U/min und insbesondere von unter 20 U/min.

Gemäß der Erfindung wird ein Synchrongenerator vorgesehen, einen Durchmesser von > 4 m aufweist. Ferner ist der Synchrongenerator als ein fremderregter Synchrongenerator ausgestaltet.

## Patentansprüche

1. Synchrongenerator-Stator, mit
einem Statorring (300),
einem Statorblechpaket (400),
einem umlaufenden Spalt (310) zwischen dem Statorring (300) und dem Statorblechpaket (400), und
einer Entkopplungseinheit (500), zur Vibrations - und/oder Körperschallentkopplung zwischen dem Statorblechpaket (400) und dem Statorring (300), mit einem ersten Blech (510), das an eine Kontur des Statorblechpaketes (400) angepasst ist, und einem zweiten Blech (530), das an die Kontur des Statorringes (300) angepasst ist,
**gekennzeichnet durch**
eine Mehrzahl von Entkopplungseinheiten (500) in dem Spalt (310),
wobei zwischen dem ersten und zweiten Blech (510, 530) jeder Entkoppelungseinheit (500) eine Matte (520) mit einem Hohlraum und einem Einlassventil (540) vorgesehen ist.

2. Synchrongenerator-Stator nach Anspruch 1, wobei
die Matte (520) als eine einvulkanisiserte Gummidruckmatte ausgestaltet ist.

3. Synchrongenerator, mit
einem Synchrongenerator-Stator, der
einen Statorring (300),
ein Statorblechpaket (400),
einen umlaufenden Spalt (310) zwischen dem Statorring (300) und dem Statorblechpaket (400), und
einer Entkopplungseinheit (500) mit einem ersten Blech (510), das an eine Kontur des Statorblechpaketes (400) angepasst ist, und einem zweites Blech (530) aufweist, das an die Kontur des Statorringes (300) angepasst ist,
**gekennzeichnet durch**
eine Mehrzahl von Entkopplungseinheiten (500) in dem Spalt (310) aufweist,wobei zwischen dem ersten und zweiten Blech (510, 530) jeder Entkoppelungseinheit (500) eine Matte (520) mit einem Hohlraum und einem Einlassventil (540) vorgesehen ist.

4. Windenergieanlage mit einem Synchrongenerator nach Anspruch 3.

5. Verfahren zum Montieren eines Synchrongenerator-Stators, der einen Statorring (300) und ein Statorblechpaket (400) aufweist, mit den Schritten:
Einführen des Statorblechpaketes (400) in einen Statorring (300), so dass ein umlaufender Spalt (310) zwischen dem Statorring (300) und dem Statorblechpaket (400) vorhanden ist,
Einführen einer Mehrzahl von Entkopplungseinheiten (500), zur Vibrations - und/oder Körperschallentkopplung zwischen dem Statorblechpaket (400) und dem Statorring (300), in den Spalt (310),
wobei jede Entkopplungseinheit (500) ein erstes Blech (510), das an eine Kontur des Statorblechpaketes (400) angepasst ist, und ein zweites Blech (530) das an die Kontur des Statorringes (300) angepasst ist, aufweist wobei zwischen dem ersten und zweiten Blech (510, 530) eine Matte (520) mit einem Hohlraum und einem Einlassventil (540) vorgesehen ist, ferner mit dem Schritt:
Einführen eines Druckmediums über das Einlassventil (540) in der Entkopplungseinheit (500), um einen Hohlraum der Matte (520) zwischen einem ersten und zweiten Blech (510, 530) zu füllen, nachdem die Mehrzahl der Entkopplungseinheiten (500) in den Spalt (310) eingeführt worden ist.

## Claims

1. Synchronous-generator stator, comprising
a stator ring (300),
a stator core (400),
a circumferential gap (310) between the stator ring (300) and the stator core (400), and
a decoupling unit (500) for decoupling of vibration and/or structure borne noise between the stator ring (300) and the stator core having a first plate (510), which is matched to a contour of the stator core (400), and having a second plate (530), which is matched to the contour of the stator ring (300),
**characterized by**
a plurality of decoupling units (500) in the gap (310),
wherein a mat (520), having a cavity and an inlet valve (540), is provided between the first and the second plate (510, 530) of each decoupling unit (500).

2. Synchronous-generator stator according to Claim 1, wherein
the mat (520) is designed as a vulcanised-in rubber pressure mat.

3. Synchronous generator, comprising
a synchronous-generator stator, which has
a stator ring (300),
a stator core (400),
a circumferential gap (310) between the stator ring (300) and the stator core (400), and
a decoupling unit (500) with a first plate (510), which is matched to a contour of the stator core (400), and with a second plate (530), which is matched to the contour of the stator ring (300),
**characterized by**
a plurality of decoupling units (500) in the gap (310),
wherein a mat (520), having a cavity and an inlet valve (540), is provided between the first and the second plate (510, 530) of each decoupling unit (500).

4. Wind turbine having a synchronous generator according to Claim 3.

5. Method for mounting a synchronous-generator stator that has a stator ring (300) and a stator core (400), comprising the steps:
inserting the stator core (400) in a stator ring (300), such that there is a circumferential gap (310) between the stator ring (300) and the stator core (400),
inserting a plurality of decoupling units (500) in the gap (310) for decoupling of vibration and/or structure borne noise between the stator ring (300) and the stator core,
wherein each decoupling unit (500) has a first plate (510), which is matched to a contour of the stator core (400), and has a second plate (530), which is matched to the contour of the stator ring (300),
wherein a mat (520), having a cavity and an inlet valve (540), is provided between the first and the second plate (510, 530), additionally comprising the step:
introducing a pressure medium via the inlet valve (540) in the decoupling unit (500), in order to fill a cavity of the mat (520) between a first and a second plate (510, 530), after the plurality of decoupling units (500) have been inserted in the gap (310).

## Revendications

1. Stator de générateur synchrone, avec
une bague de stator (300),
un empilage de tôles statoriques (400),
un entrefer périphérique (310) entre la bague de stator (300) et l'empilage de tôles statoriques (400), et
une unité de découplage (500), pour le découplage des vibrations et/ou des bruits de structure entre l'empilage de tôles statoriques (400) et la bague de stator (300), avec une première tôle (510), qui est adaptée à un contour de l'empilage de tôles statoriques (400), et une deuxième tôle (530), qui est adaptée au contour de la bague de stator (300),
**caractérisé par**
une pluralité d'unités de découplage (500) dans l'entrefer (310),
dans lequel entre la première et la deuxième tôle (510, 530) de chaque unité de découplage (500), une natte (520) avec une cavité et une soupape d'admission (540) est prévue.

2. Stator de générateur synchrone selon la revendication 1, dans lequel
la natte (520) est réalisée sous la forme d'une natte de pression en caoutchouc vulcanisée.

3. Générateur synchrone, avec
un stator de générateur synchrone, qui présente
une bague de stator (300),
un empilage de tôles statoriques (400),
un entrefer périphérique (310) entre la bague de stator (300) et l'empilage de tôles statoriques (400), et
une unité de découplage (500) avec une première tôle (510), qui est adaptée à un contour de l'empilage de tôles statoriques (400), et une deuxième tôle (530), qui est adaptée au contour de la bague de stator (300),
**caractérisé par**
une pluralité d'unités de découplage (500) dans l'entrefer (310), dans lequel entre la première et la deuxième tôle (510, 530) de chaque unité de découplage (500), une natte (520) avec une cavité et une soupape d'admission (540) est prévue.

4. Éolienne avec un générateur synchrone selon la revendication 3.

5. Procédé de montage d'un stator de générateur synchrone, qui présente une bague de stator (300) et un empilage de tôles statoriques (400), avec les étapes de :
introduction de l'empilage de tôles statoriques (400) dans une bague de stator (300), de façon à ce qu'un entrefer périphérique (310) soit présent entre la bague de stator (300) et l'empilage de tôles statoriques (400), et
introduction d'une pluralité d'unités de découplage (500), pour le découplage des vibrations et/ou des bruits de structure entre l'empilage de tôles statoriques (400) et la bague de stator (300), dans l'entrefer (310),
dans lequel chaque unité de découplage (500) présente une première tôle (510), qui est adaptée à un contour de l'empilage de tôles statoriques (400), et une deuxième tôle (530), qui est adaptée au contour de la bague de stator (300),
dans lequel entre la première et la deuxième tôle (510, 530), une natte (520) avec une cavité et une soupape d'admission (540) est prévue, avec en outre l'étape de :
introduction d'un agent de pression dans l'unité de découplage (500) via la soupape d'admission (540) pour remplir une cavité de la natte (520) entre une première et une deuxième tôle (510, 530) après que la pluralité d'unités de découplage (500) a été introduite dans l'entrefer (310).
